# EUROPEAN PATENT SPECIFICATION

(11) **EP 1 617 412 B1**
(45) Date of publication and mention of the grant of the patent: **03.03.2010**
(21) Application number: 05015083.8
(22) Date of filing: 12.07.2005
(51) Int. Cl.: G10L 19/00

(54) **Mobile communication device for inserting watermark into voice signal**
Mobilkommunikationsgerät zum Einsetzen des Wasserzeichens im Sprachsignal
Dispositif de communication mobile pour l'insertion de données de filigrane dans un signal vocal

(30) Priority: 12.07.2004 KR 2004053912
(43) Date of publication of application: 18.01.2006
(73) Proprietor: LG Electronics, Inc., Seoul (KR)
(72) Inventor: Yeon, Kyu Chel, Seoul (KR)
(74) Representative: Katérle, Axel

(56) References cited:
- EP-A- 1 333 424
- WO-A-2004/100452

## Description

### BACKGROUND OF THE INVENTION

### Field of the Invention

The present invention relates to an apparatus and a method for a digital data transmission by using a mobile telecommunication terminal, and more particularly, to a method of transmitting and receiving for inserting/withdrawing digital data into/from a voice signal in a watermark form.

### Discussion of the Related Art

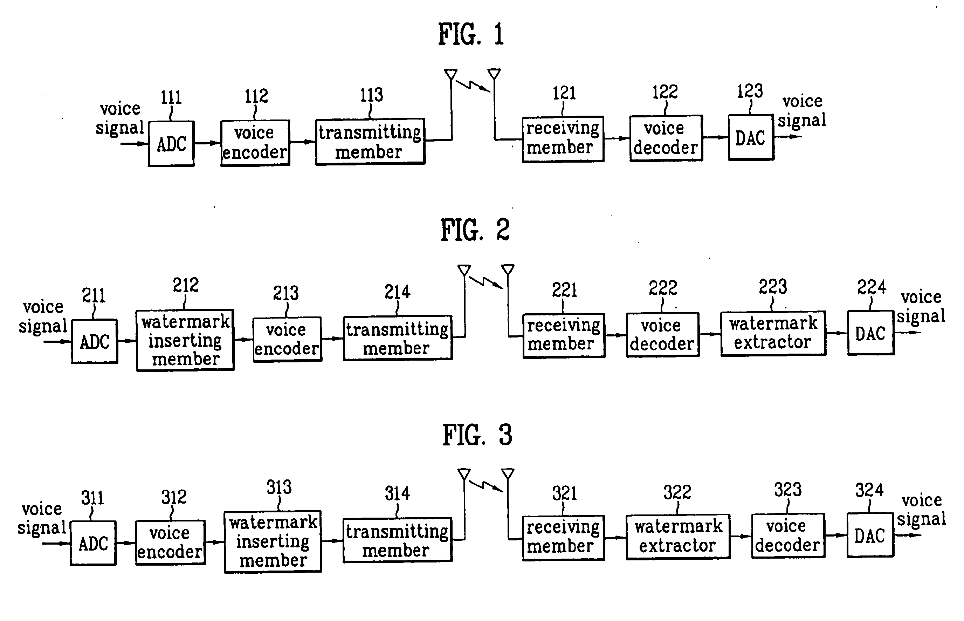

FIG. 1 illustrates a block diagram showing a process of a conventional voice communication schematically. As illustrated, during voice communication via a conventional mobile phone, an analog voice signal received through a microphone is converted into a digital signal by an analog digital converter (ADC) 111 at a transmitting platform, and then transmitted to a transmitter 113 through a voice encoder 112 for compression. A signal received at a receiving member 121 is an encoded signal. The signal transmitted through the receiving member 121 is decoded by the voice decoder 122, and then outputted as an audible sound through a digital analog converter (DAC) 123.

Meanwhile, there are such a method of transmitting a text message from the conventional mobile phone as SMS, Email, and IM (instant message). Excepting a protocol for voice communication, there is a protocol for the SMS, Email, and IM, and the protocol is needed additionally.

When additional information including a text message is sent during voice communication, the information needs to be transmitted through SMS, Email and IM, which are used for a conventional text message. However, a method used for a conventional text message needs a protocol for the text message in addition to a protocol for voice communication. When the text message is transmitted or received during voice communication, a communication channel is additionally needed except voice communication, and therefore a charge for using the text message is additionally demanded in addition to a charge for voice communication.

EP 1 333 424 A2 discloses a system for embedding data into a voice signal in which a voice codec is used to encode an input voice and to output an encoded voice code. The encoded voice code comprises a plurality of element codes. An embedded data generator generates data for being embedded into the encoded voice code. A first element code is used to determine whether specific data embedding conditions are satisfied. If these conditions are satisfied, a second element code is replaced by embedded data in order to embed the data into the encoded voice code.

WO 01/67671 A2 discloses a method for embedding data into a voice signal whereby the voice signal is converted into an intermediate representation depending on a coder that is used. The method consists of applying an encoding transformation to the voice signal resulting in a set of floating point coefficients that are used for subsequent compression. Quantisation and truncation steps necessary to convert the coefficient representation into a compressed digital signal are not performed at a this first step. In a second step, it is chosen which portions of the transformed voice signal are suitable for containing additional data. A coefficient parity and coding technique is used the modify the coefficients so that the quantized and truncated version of the digital signal contains the embedded data.

### SUMMARY OF THE INVENTION

The present invention provides an apparatus and a method as defined in claims 4 and 1, respectively.

The apparatus and method allow to transmit a text message without an additional charge and without using an additional protocol during communication by using a mobile communication terminal.

A characteristic of the method for the digital data transmission during communication in accordance with the present invention is inserting additional information in a digital watermark form into the voice signal, and then transmitting the signal.

In one embodiment, an apparatus for transmitting additional information during communication includes an analog-digital converter for converting an analog voice signal into a digital signal, the analog voice signal inputted through a microphone; a watermark inserting member for inserting a watermark into the voice signal digitized through the analog-digital converter; a voice encoder for creating an encoded voice signal thorough a process of compressing and encoding the voice signal having the watermark inserted therein; and a transmitter for transmitting the encoded voice signal.

It is to be understood that both the foregoing general description and the following detailed description of the present invention are exemplary and explanatory and are intended to provide further explanation of the invention as claimed.

### BRIEF DESCRIPTION OF THE DRAWINGS

The accompanying drawing are included to provide a further understanding of the invention. In the drawings;

FIG. 1 illustrates a schematic block diagram showing a conventional voice communication process;

FIG. 2 illustrates a block diagram showing a communication process including a structure in accordance with a first embodiment of an apparatus for transmitting additional information during communication;

FIG. 3 illustrates a block diagram showing a communication process including a structure in accordance with a second embodiment of an apparatus for transmitting additional information during communication;

FIG. 4 illustrates a flow chart showing a process in accordance with a first embodiment of a method for transmitting additional information during communication; and

FIG. 5 illustrates a flow chart showing a process in accordance with a second embodiment of a method for transmitting additional information during communication.

### DETAILED DESCRIPTION OF THE INVENTION

Reference will now be made in detail to the preferred embodiments of the present invention, examples of which are illustrated in the accompanying drawings.

Hereinafter, an apparatus and a method for transmitting digital data during communication in accordance with the present invention will be described referring to appended drawings.

As abovementioned, a notable feature of the present invention is that additional information is inserted into a voice signal as a watermark during communication by using a mobile communication terminal, and transmitted. The signal is then received and decoded. In other words, a value to be transmitted is inserted into an original voice signal in a watermark form. A value inserted into a process of encoding a voice needs not to be a harsh grating noise.

The watermark applied to the voice is divided into an encoding process for inserting additional information that is desired to be inserted into the original voice signal, and a decoding process for extracting the inserted signal. In the encoding process, the additional information is inserted into the original voice signal by changing the information into a signal that is unrecognizable by a human. There is a PN sequence or an echo signal as an inserting method. In the decoding process, the PN sequence or the echo signal inserted into the voice signal is extracted. The inserted value in the encoding process is known through the extracted PN sequence or the echo signal.

As an art for filling in the digital watermark into the digital audio signal, the lowest bit (LSB) of a PCM audio signal in 16 bits is used for watermark data. Also used is an art for filling in the additional information into the digital audio signal as the watermark by manipulating a modified Discrete Cosine Transformation (MDCT) coefficient of the compression encoded digital audio signal or a coefficient of a sub band.

In the present invention, the voice is collected by using a microphone in the same method as the transmitting platform in the conventional voice communication, and digitized through the analog-digital converter. The conventional method creates the encoded voice signal by using a digital voice signal 'directly for the voice encoding.

However, in the present invention, the digital voice signal is used, and watermark insertion and voice encoding are performed so as to create the encoded voice signal with the watermark inserted therein. The encoded voice signal having the watermark inserted therein is transmitted through a conventional transmitter. A block for decoding and encoding the watermark is positioned at a front and rear end of the voice encoder and decoder according to the method of inserting the watermark.

FIG. 2 illustrates a block diagram showing a structure in accordance with a first embodiment of an apparatus for transmitting digital data during communication.

First of all, a part for inserting additional information into the voice signal and transmitting includes an analog digital converter (ADC) 211 for converting an analog voice signal inputted through the microphone into a digital signal, a watermark inserting member 212 for inserting the watermark into the voice signal being digitized through the analog digital converter (ADC) 211, a voice encoder 213 for creating a voice signal encoded through a process of compressing and encoding the voice signal having the watermark inserted therein, and a transmitter 214 for transmitting the encoded voice signal. Meanwhile, an apparatus for receiving additional information during communication includes a receiving member 221 for receiving a signal having the additional information inserted therein through an antenna, a voice decoder 222 for decoding the encoded voice signal received through the receiving member 221 into a digital voice signal, a watermark extractor 223 for extracting the watermark, and a digital-analog converter 224 for converting the digital voice signal into an analog signal.

FIG. 3 illustrates a block diagram showing a structure in accordance with a second embodiment of an apparatus for transmitting digital data during communication. As illustrated, the apparatus for transmitting digital data in accordance with the second embodiment includes an analog-digital converter 311 for converting the analog voice signal inputted through the microphone into the digital signal, a voice encoder 312 for creating an encoded voice signal through a process of compressing and encoding the voice signal being digitized through the analog-digital converter 311, a watermark inserter 313 for inserting the watermark into the encoded voice signal, and a transmitter 314 for transmitting the voice signal having the watermark inserted therein.

Contrary to the structure of FIG. 2, after encoding the voice, the converted digital data is inserted as the watermark. The structure for decoding voice at the receiving platform, contrary to the illustration of FIG. 2, includes a watermark extractor 322 for extracting the watermark from the voice signal received through a receiving member 321, a voice decoder 323 for decoding the voice signal, from which the watermark has been extracted, into the digital voice signal, and a digital-analog converter (DAC) 224.

The signal is received through the receiving member 321 on a mobile phone of a receiver, and the encoded voice signal having the watermark inserted therein is voice decoded, and the inserted watermark signal is extracted. The additional information is extracted from the received signal by the watermark extractor 322, and the digital voice signal is obtained through the voice decoder 323. The digital voice signal is converted into the analog signal through the digital-analog converter 324 in the same way as the conventional method, and then outputted through a speaker.

Additional information service data commonly used in a recent mobile communication system is inserted in a watermark form into the digital voice signal in accordance with the present invention. The additional information service data being inserted may be a short message service (SMS), an enhanced messaging service (EMS), and a multimedia messaging service (MMS). Transmission data of the multimedia messaging service may be a bell sound, a compressed digital music file (MP3) and animation data embodied at the mobile communication terminal.

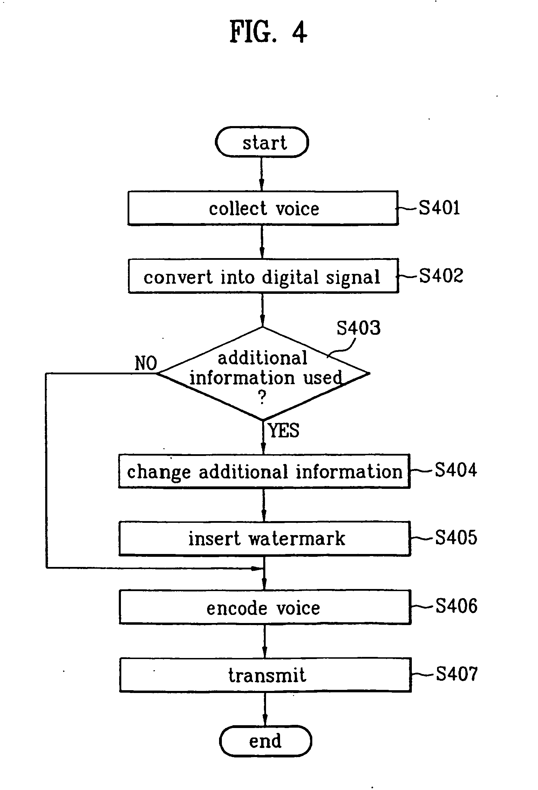

FIG. 4 illustrates a flow chart showing a process in accordance with a first embodiment of an apparatus for transmitting additional information during communication. A voice inputted through the microphone is collected as the voice signal (S401), and the analog voice signal is converted into the digital signal (S402).

When a user needs to transmit the digital data during communication, a signal, for example, for transmitting the digital data is inputted as an interrupt in various forms such as pressing a particular key during communication. In this instance, an input key being used is assembled by a plurality of keys, or a separate menu key may be formed (S403). Accordingly, the signal for transmitting the digital data is inputted (S405) into the voice signal in the watermark form by converting the digital data (S404). As abovementioned, the digital data may include a various kinds of data such as SMS, EMS, and MMS or a character image.

The voice signal having the watermark inserted therein is then transmitted (S407) after an encoding process (S406) for converting the digital voice signal having the watermark inserted therein in a way determined by a communication mode. Only for a general voice communication, a conventional communication process is performed in the same way without a separate transaction. In other words, a wireless voice signal is transmitted through the transmitter by compressing and encoding the voice signal in a digital form.

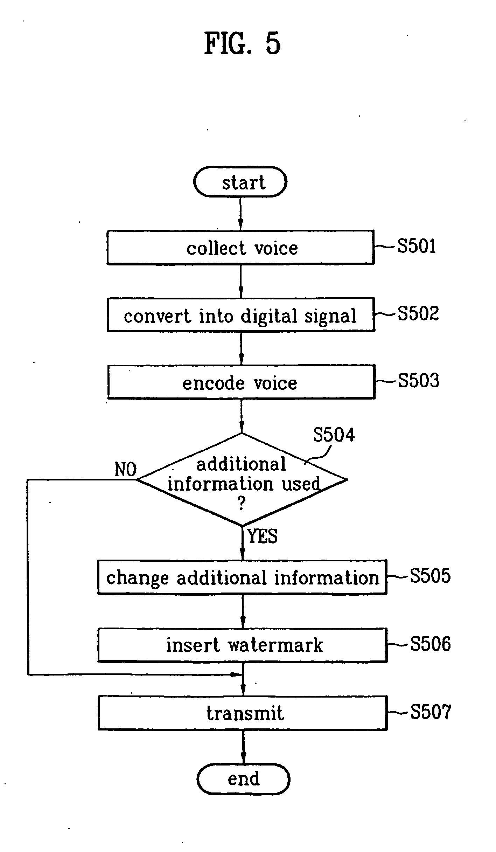

FIG. 5 illustrates a flow chart showing a process in accordance with a second embodiment of a method for transmitting additional information during communication. The voice inputted through the microphone is collected as the analog voice signal (S501), and the analog signal is converted into the digital signal (S502). The voice signal in a digital form is compressed and encoded (S503) in the way determined by the communication mode.

When a user wants to transmit digital data during communication, the signal for digital data transmission is inputted (S504) in an interrupt form. The digital data is converted (S505) and inserted (S506) into the voice signal in the watermark form, and then the voice signal having the watermark inserted therein is transmitted (S507).

According to the transmitting method illustrated in FIGS. 4 and 5, the decoding process is embodied correspondingly. As the process of inserting the watermark is performed before and after the encoding process, the decoding process is similar to the process of inserting the watermark. In other words, the signal is decoded after the watermark is extracted, or the watermark is extracted after signal is decoded.

As aforementioned, the method for digital data transmission in accordance with the present invention does not require an additional fee because a function of transmitting additional information such as a text message is performed via a voice channel during communication without using an additional protocol. The function is used as an additional function of the mobile phone such as exchanging a memo during communication, and used as a function of transmitting an advertising message.

## Claims

1. A method for digital data transmission by using a mobile communication device, comprising the steps of:
- performing an analog-to-digital conversion (5402) of an analog original voice signal inputted through a microphone to generate a digitally converted original voice signal;
- inserting (S405) digital watermark data into the digitally converted original voice signal;
- encoding (5406) the voice signal having the digital watermark data inserted therein into an encoded voice signal;
- transmitting (S407) the encoded voice signal.

2. The method of claim 1, wherein the digital watermark data is additional information service data being used in a mobile communication system.

3. The method of claim 2, wherein the additional information service data is data of at least one of a short message service (SMS), an enhanced messaging service (EMS), and a multimedia messaging service (MMS).

4. An apparatus for digital data transmission by using a mobile communication terminal, comprising:
- an analog-digital converter (211) configured to convert an analog original voice signal inputted through a microphone into a digitally converted original voice signal;
- a watermark inserting member (212) configured to insert digital watermark data into the digitally converted original voice signal;
- a voice encoder (213) configured to encode the voice signal having the digital watermark data inserted therein Into an encoded voice signal; and
- a transmitter (214) configured to transmit the encoded voice signal

5. The apparatus of claim 4, wherein the digital watermark data is additional information service data being used In a mobile communication system.

6. The apparatus of claim 5, wherein the additional information service data is data of at least one of a short message service (SMS), an enhanced messaging service (EMS), and a multimedia messaging service (MMS).

## Patentansprüche

1. Verfahren zur digitalen Datenübertragung unter Verwendung eines mobilen Kommunikationsgeräts, umfassend die Schritte:
- Durchführen einer Analog/Digital-Wandlung (S402) eines über ein Mikrofon eingegebenen analogen ursprünglichen Sprachsignals, um ein digital gewandeltes ursprüngliches Sprachsignal zu erzeugen,
- Einfügen (S405) digitaler Wasserzeichendaten in das digital gewandelte ursprüngliche Sprachsignal,
- Kodieren (S406) des Sprachsignals mit den darin eingefügten digitalen Wasserzeichendaten zu einem kodierten Sprachsignal,
- Übermitteln (S407) des kodierten Sprachsignals.

2. Verfahren nach Anspruch 1, wobei die digitalen Wasserzeichendaten zusätzliche Informationsdienstdaten sind, die in einem mobilen Kommunikationssystem verwendet werden.

3. Verfahren nach Anspruch 2, wobei die zusätzlichen Informationsdienstdaten Daten eines Kurznachrichtendienstes (SMS), eines erweiterten Nachrichtendienstes (EMS) oder/und eines Multimedianachrichtendienstes (MMS) sind.

4. Vorrichtung zur digitalen Datenübertragung unter Verwendung eines mobilen Kommunikationsendgeräts, umfassend:
- einen Analog/Digital-Wandler (211), welcher dazu eingerichtet ist, ein über ein Mikrofon eingegebenes analoges ursprüngliches Sprachsignal in ein digital gewandeltes ursprüngliches Sprachsignal umzuwandeln,
- ein Wasserzeicheneinfügungsorgan (212), welches dazu eingerichtet ist, digitale Wasserzeichendaten in das digital gewandelte ursprüngliche Sprachsignal einzufügen,
- einen Sprachkodierer (213), welcher dazu eingerichtet ist, das Sprachsignal mit den darin eingefügten digitalen Wasserzeichendaten zu einem kodierten Sprachsignal zu kodieren, und
- einen Sender (214), welcher dazu eingerichtet ist, das kodierte Sprachsignal zu übertragen.

5. Vorrichtung nach Anspruch 4, wobei die digitalen Wasserzeichendaten zusätzliche Informationsdienstdaten sind, die in einem mobilen Kommunikationssystem verwendet werden.

6. Vorrichtung nach Anspruch 5, wobei die zusätzlichen Informationsdienstdaten Daten eines Kurznachrichtendienstes (SMS), eines erweiterten Nachrichtendienstes (EMS) oder/und eines Multimedianachrichtendienstes (MMS) sind.

## Revendications

1. Procédé de transmission de données numériques à l'aide d'un dispositif de communication mobile, comprenant les étapes consistant à :
- effectuer une conversion analogique-numérique (S402) d'un signal vocal original analogique appliqué en entrée par le biais d'un microphone pour produire un signal vocal original numériquement converti ;
- insérer (S405) des données de filigrane numérique dans le signal vocal original numériquement converti ;
- coder (S406) le signal vocal dans lequel les données de filigrane numérique sont insérées, en un signal vocal codé ;
- émettre (S407) le signal vocal codé.

2. Procédé selon la revendication 1, dans lequel les données de filigrane numérique sont des données de service d'information additionnel en cours d'utilisation dans un système de communication mobile.

3. Procédé selon la revendication 2, dans lequel les données de service d'information additionnel sont des données d'au moins l'un parmi un service de minimessages (SMS), un service de messagerie enrichi (EMS) et un service de messagerie multimédia (MMS).

4. Appareil pour la transmission de données numériques à l'aide d'un terminal de communication mobile, comprenant :
- un convertisseur analogique-numérique (211) configuré pour convertir un signal vocal original analogique appliqué en entrée par le biais d'un microphone en un signal vocal original numériquement converti ;
- un élément d'insertion de filigrane (212) configuré pour insérer des données de filigrane numérique dans le signal vocal original numériquement converti ;
- un codeur vocal (213) configuré pour coder le signal vocal dans lequel les données de filigrane numérique sont insérées, en un signal vocal codé ; et
- un émetteur (214) configuré pour émettre le signal vocal codé.

5. Appareil selon la revendication 4, dans lequel les données de filigrane numérique sont des données de service d'information additionnel en cours d'utilisation dans un système de communication mobile.

6. Appareil selon la revendication 5, dans lequel les données de service d'information additionnel sont des données d'au moins l'un parmi un service de minimessages (SMS), un service de messagerie enrichi (EMS), et un service de messagerie multimédia (MMS).
